**Europäisches Patentamt**

**European Patent Office**

**Office européen des brevets**

(19)

(11) Veröffentlichungsnummer: **0 248 995**
**B1**

(12) **EUROPÄISCHE PATENTSCHRIFT**

(45) Veröffentlichungstag der Patentschrift: **05.09.90**

(21) Anmeldenummer: **87105083.7**

(22) Anmeldetag: **06.04.87**

(51) Int. Cl.⁵: **G 01 F 23/04, G 01 F 23/22**

(54) Füllstandskontrollgerät.

(30) Priorität: **11.06.86 DE 3619678**

(43) Veröffentlichungstag der Anmeldung:
**16.12.87 Patentblatt 87/51**

(45) Bekanntmachung des Hinweises auf die
Patenterteilung:
**05.09.90 Patentblatt 90/36**

(84) Benannte Vertragsstaaten:
**CH DE FR GB LI**

(56) Entgegenhaltungen:
**DE-A-2 933 618**
**DE-A-2 949 162**
**DE-B-2 855 643**
**DE-C- 582 760**
**GB-A- 821 148**

(73) Patentinhaber: **Hermann, Eberhard**
**Sonnenweg 3**
**D-7888 Rheinfelden-Eichsel (DE)**

(72) Erfinder: **Hermann, Eberhard**
**Sonnenweg 3**
**D-7888 Rheinfelden-Eichsel (DE)**

(74) Vertreter: **Schmitt, Hans, Dipl.-Ing. et al**
**Patentanwälte Dipl.-Ing H. Schmitt Dipl.-Ing. W.**
**Maucher Dreikönigstrasse 13**
**D-7800 Freiburg (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung betrifft eine Vorrichtung zum Kontrollieren und/oder Anzeigen des Füllstandes für flüssige, staubförmige, körnige insbesondere leichte Schüttguter in einem Behälter, mit einem stabförmigen Schwinger und einem Schwingungserreger, mit welchem der Schwinger zu Schwingungen angeregt wird, und mit einem Schwingungsabgriffssystem, wobei das eine freie Ende des Schwingers in den Füllraum für das Schüttgut oder dgl. ragt.

Eine derartige Vorrichtung ist aus der DE-PS 582 760 bekannt. Diese Patentschrift zeigt einen mittig in einer elastischen Membran gelagerten Schwingstab, der als Drehschwinger arbeitet. Eine Hälfte des Stabes ragt in das Innere des Behälters und wird vom Füllgut bedämpft. Die mit der Dämpfung einhergehende vergrößere Stromaufnahme des elektromagentischen Schwingungserregungssystems kann gemessen werden. Diese aus dem Jahre 1933 stammende Konstruktion ist einfach und robust. Sie hat allerdings den Nachteil, daß beim Schwingungsvorgang über die elastisch deformierte Membran Wechseldrehmomente auf die Behälterwandung wirken, wodurch Schwingungsenergie verloren geht. Aus diesem Grunde muß das Schwingungserregungssystem entsprechend leistungsstark ausgelegt sein. Auf geringe Dämpfungen durch leichte Schüttgüter reagiert es nicht. Aus diesem Grund kann es nur für sehr schwere Füllgüter und auch da nur bedingt eingesetzt werden.

Auch die britische Patentschrift GB 1 013 186 zeigt eine eingangs beschriebene Vorrichtung mit einem Schwingstab, der einseitig eingespannt ist und zu Biegeschwingungen angeregt wird. Der Stab ragt in das Innere des Behälters und wird vom Füllgut bedämpft. Beim Schwingungsvorgang wirken Wechseldrehmomente auf die Einspannvorrichtung, wodurch Schwingungsenergie zur Behälterwandung hin verloren geht und die Anzeigeempfindlichkeit vermindert wird.

Um die Empfindlichkeit der Vorrichtung zu erhöhen, wurde ein alternativer Lösungsweg eingeschlagen, der — in zahlreichen Varianten realisiert — doch auf dem gleichen physikalischen Prinzip beruht. Statt einem Schwinger werden zwei Schwinger benutzt, deren Phasen so aufeinander eingestellt werden, daß sich die bei der Schwingung auftretenden, nach außen wirkenden Kräfte gegenseitig kompensieren, so daß das Gesamtsystem nach außen, das heißt zur Behälterwandung hin, möglichst kräftefrei ist:

In DE-PS 17 73 815 C 3 wird ein "Stimmgabelsystem" beschrieben. Hier ragen zwei Biegeschwinger parallel in das Innere des Behälters und werden in Gegenphase zu Biegeschwingungen angeregt. Die Wechseldrehmomente der Einzelstäbe kompensieren sich gegenseitig, auch der Schwerpunkt des Systems bleibt in Ruhe, so daß das System praktisch keine Schwingungsenergie zur Behälterwandung hin verliert und deshalb eine hohe Empfindlichkeit auch für leichte Schüttgüter aufweist. Der Nachteil besteht darin, daß im Behälterinneren Material zwischen den beiden Schwingstäben eingeklemmt werden kann, so daß es zu Fehlanzeigen kommen kann. Außerdem bilden sich bei verschiedenen Füllgütern Brücken zwischen den beiden Schwingstäben, so daß diese bei leerem Behälter nicht mehr anschwingen können.

Die Offenlegungsschriften DE-OS 29 33 618 A1, DE-OS 31 40 938 A1 beschreiben Schwingungssysteme, bei denen zwei Schwingungselemente verwendet werden, die ineinander angeordnet sind, wobei das äußere Schwingungselement als Drehschwinger arbeitet, während das innere Schwingungselement als Drehschwinger oder Biegeschwinger arbeiten kann. Die beiden Schwingungselemente schwingen in Gegenphase, wodurch sich die Wechseldrehmomente kompensieren und wodurch auch der Schwerpunkt des Systems in Ruhe bleibt. Solche Geräte verlieren praktisch keine Schwingungsenergie zur Behälterwandung hin und haben, wie das Stimmgabelsystem, eine hohe Empfindlichkeit auch für sehr leichte Schüttgüter. Im Gegensatz zum Stimmgabelsystem ragt nur ein Schwingungselement in das Innere des Behälters, so daß das problem des Einklemmens von Füllgut zwischen den Schwingstäben bzw. die Brückenbildung von Füllgut kein Problem darstellt. Gleichwohl bestehen auch diese Systeme im Prinzip aus zwei Schwingern, die über mechanische Spannungsbrücken ihre bei isolierter Schwingung nach außen wirkenden Rückstellkräfte gegeneinander kompensieren. Voraussetzung eines exakten Ausgleiches bei der Teilschwingung ist deshalb jeweils eine sehr sorgfältige Abstimmung beider Einzelschwingungen aufeinander. Dies bedingt einen relativ hohen Herstellungs aufwand. Zudem besteht der Nachteil, daß bei Dejustierung z.B. durch mechanische Deformationen, die ordentliche Funktion des Gerätes gestört werden kann.

Es besteht deshalb die Aufgabe, eine Vorrichtung der eingangs genannten Art zu schaffen, die als Einschwingersystem gegen Dejustierungen durch rauhen Betrieb unanfällig und in der Herstellung einfach ist und gleichzeitig mindestens genauso empfindlich reagiert wie die bekannten Konstruktionen. Dabei soll der in den Behälter ragende Schwingstab selbst nach mechanischer Deformation noch funktionsfähig sein.

Diese Aufgabe wird erfindungsgemäß dadurch gelöst, daß der Schwinger ein als Biegeschwinger ausgebildeter Stab ist, und daß er zwei Lagerungen mit Abstand zu seinen freien Enden aufweist.

Diese Konstruktion, die auf das Prinzip des einelementigen Schwingers zurückgreift, verbindet den Vorteil einfacher und billiger Herstellung mit geringer Störanfälligkeit der "alten" Lösung mit einem Schwinger mit der Empfindlichkeit moderner bekannter Systeme, die mit zwei gegenphasig schwingenden Systemen arbeiten. Die Beschränkung auf ein schwingendes System verhindert, daß auch bei rauhem Betrieb, insbesondere bei Verformungen oder Stößen oder durch Temperaturspannungen die Justierung verschoben wird, wie es beim Zweischwingersystem leicht der Fall sein kann. Die Justierung der erfindungsgemäßen Vorrichtung ist immer schon dann gesichert, wenn die Lagerung des Schwingungsstabes in den Membranen sich nicht verschiebt. Diese Bedingung ist technisch sehr einfach zu realisieren und gegen störende Einflüsse von außen abzusichern.

Die erfindungsgemäße Vorrichtung kann dadurch vervollkommnet werden, daß der Stab am oder nahe bei den Stellen gelagert ist, wo sich bei Anregung von Schwingungen des Stabes Schwingungsknoten bilden. Insbesondere dann, wenn der Stab bei Anregung seiner Grundschwingung in den beiden Schwingungsknoten gelagert wird, treten praktisch keine Kräfte auf, die auf die Lager wirken. Es treten also von vorneherein keine Kräfte auf, die über Hilfskonstruktionen und Justierungen zum Ausgleich gebracht werden müßten. Das Schwingungserregungssystem kann somit auch sehr schwach ausgelegt werden, wodurch mindestens eine so hohe Empfindlichkeit erzielt werden kann, wie durch die bekannten Systeme, die auf der Grundlage von zwei gegenphasigen Schwingungen arbeiten.

Werden die beiden Lagerungen des Stabes flexibel, vorzugsweise als von diesem durchsetzte und mit ihm verbundene Membranen ausgebildet, ergibt sich eine einfache und wirksame Möglichkeit, eine möglichst verlustfreie Lagerung zu realisieren, die weiterhin das Schwingungssystem nach außen hin gegenüber dem Stoff des Füllgutes abdichtet und darüberhinaus als Hitze- bzw. Kälteisolation dient.

Die Membranen können auch auf einfache Weise dadurch miteinander verbunden werden, daß sie über ein Rohrstück, ein Käfig od. dgl. miteinander verbunden werden. Auf diese Weise ergibt sich auch ein wirksamer Schutz des Schwingstabes. Im Gegensatz zur bisher bekannten Technik dient die Verbindung zwischen den beiden Membranen nicht als mechanische Spannungsbrücke zum Ausgleich der Rückstellkräfte von zwei isolierten Schwingungen, sondern hat wesentliche Halte- und Schutzfunktion.

Da eine physikalisch völlig freie Lagerung des Schwingstabes praktisch technisch nur angenähert werden kann, bietet es sich an, daß die beiden Membranen zur Lagerung des schwingenden Stabes die gleiche Form und Größe sowie das gleiche Material haben und in Ruhestellung vorzugsweise parallel zueinander angeordnet sind. Denn hierdurch werden die — zwar äußert geringen — aber dennoch technisch nicht zu vermeidenden Rückstellkräfte der Membranen über das die Membranen verbindende Rohrstück bzw. Käfig od. dgl. gegeneinander kompensiert.

Eine dichte Verbindung zwischen dem Gehäuse des Schwingungssystems und der Behälterwand wird vorzugsweise dadurch erreicht, daß an der Außenseite des die beiden Membranen verbindenden Rohrstücks oder Käfigs od. dgl. insbesondere ein ringförmiges Verbindungselement zum dichten Verbinden mit einer entsprechenden Öffnung in der Wandung des Behälters vorgesehen ist und das Rohrstück oder der Käfig mindestens von diesem Ring aus bis zu der dem Behälterinneren näheren Membran undurchlässig dicht gestaltet ist. Dieses ringförmige Verbindungselement ist zweckmäßigerweise als Einschraubstück mit einem Außengewinde ausgebildet, so daß ein leichter Einsatz bzw. Wechsel auch im Reparaturfall erfolgen kann.

Das so beschriebene Füllstandskontrollgerät kann dadurch sehr kompakt gestaltet werden, daß es zwischen den beiden Schwingungsknoten des Schwingungsstabes, insbesondere in seiner Mitte, mit einer Zusatzmasse versehen ist. Hierdurch wird der Abstand der Schwingungsknoten verkleinert. Dadurch verringert sich der Abstand der Lagerungsmembranen im Verhältnis zur Länge der freien Enden des Schwingstabes. Da das eine Ende des Schwingstabes der Meßfühler für das Meßgut ist, wird auf diese Weise die gedämpfte Schwingstaboberfläche und damit die Empfindlichkeit vergrößert.

Die Empfindlichkeit kann weiterhin dadurch vergrößert werden, daß das in den Füllraum hineinragende freie Ende des Schwingstabes paddelförmig abgeflacht ist, wobei die Abflachung senkrecht zur Schwingungsebene des Stabes ausgebildet ist und in der Behälterwandung senkrecht gestellt ist.

Die beschriebene Vorrichtung ist weiterhin dadurch kompakter zu gestalten, daß das außerhalb des Behälters oder dgl. befindliche freie Ende des Schwingstabes, welches nicht als Meßfühler dient, durch eine an ihm angebrachte Zusatzmasse verkürzt ist.

Das Schwingungserregungs- bzw.- Schwingungsabgriffssystem ist vorzugsweise an dem Schwingstab angebracht, vorzugsweise an dem aus dem Behälter vorstehenden freien Ende des Schwingstabes. Schwingungsanregung und Schwingungsabgriff können grundsätzlich nach den verschiedensten physikalischen Prinzipien durchgeführt werden. In besonders einfacher Weise können sie jedoch durch piezoelektrische Elemente verwirklicht werden, welche zweckmäßigerweise so am Schwingstab angebracht sind, daß der Schwingstab zumindest im Bereich des Schwingungsantriebes und/oder des Schwingungsabgriffes abgeflacht oder als Flachstab ausgeführt ist und die Piezokeramikscheiben oder dgl. an einander gegenüberliegenden Flachseiten oder auf derselben Seite nebeneinander aufgeklebt sind. Durch diese Lage des piezoelektrischen Schwingserregungs- und Schwingungsabgriffssystems wird der Vorteil erreicht, daß die Piezokeramikscheiben wesentlich besser gegen Hitzeeinwirkung sowohl durch Strahlung wie auch durch Wärmeleitung abschirmbar sind als bei Konstruktion nach bekannter Technik, die voraussetzte, die Schwingungserregung unmittelbar hinter dem Meßfühler, der in den Behälterfüllraum hineinragt, anzubringen.

Um eine direkte mechanische Schwingungskopplung von dem Antriebselement auf das Abgriffelement möglichst zu vermeiden, können die beiden Piezoelemente axial versetzt entweder auf gegenüberliegenden Seiten oder auf derselben Seite angeordnet werden.

Die elektrischen Anschlüsse der beiden piezoelektrischen Systeme werden zweckmäßigerweise mit dem Eingang bzw. dem Ausgang eines Verstärkers zur Bildung eines rückgekoppelten Schwingungssystems und mit einem Meßsystem — so wie bekannt — verbunden.

Um eine dauerhafte Stabilität und eine gleichmäßige Wärmeausdehnung aller Teile zu gewährleisten, werden der Schwingstab, die Lagermembrane, deren Verbindungshülse und/oder das Befestigungsstück oder dgl. zweckmäßigerweise aus Metall, vorzugsweise aus rostfreiem Stahl bestehen, um auch die Korrosionsfestigkeit gegenüber chemisch aggressiven Stoffen sicherzustellen.

Nachstehend ist die Erfindung mit ihren ihr als wesentlich zugehörigen Einzelheiten anhand der Zeichnung noch näher beschrieben.

Es zeigt:

Fig. 1 eine Gesamtansicht des beschriebenen Füllstandskontrollgerätes,

Fig. 2 einen Längsschnitt durch ein erfindungsgemäßes Füllstandskontrollgerät sowie ein Schwingungserregungs- bzw. Abgriffssystem im Blockschaltbild.

Ein im Ausführungsbeispiel im ganzen mit 1 bezeichnetes Füllstandskontrollgerät besteht aus einem als Biegeschwinger ausgebildetem Stab 2, der Lagerungen 3 und 4 aufweist. Die Lagerung 3 liegt im Abstand von L 3 vom freien Ende 5 des Stabes 2, welches in den Füllraum 6 für das Schüttgut oder dgl. ragt. Die Lagerung 4 befindet sich im Abstand L 4 vom gegenüberliegenden freien Ende 7 des Stabes 2. Der Stab 2 wird in bekannter Weise durch ein piezoelektrisches rückgekoppeltes Schwingungserregungssystem 8 zu Schwingungen angeregt. Damit der Stab möglichst frei schwingen kann, ohne Kräfte über die als Membranen 9 ausgestalteten Lagerungen auf die Behälterwandung 13 auszuüben, sind die Abstände L 3 und L 4 so bemessen, daß die Lagerungen 3 und 4 mit den Schwingungsknoten der Grundschwingung des Stabes zusammenfallen. Hierdurch wird in einfacher Weise erreicht, daß praktisch die gesamte Rückstellkraft des schwingenden Stabes an den Lagerungspunkten 3 und 4 durch die Stabspannung selbst aufgebracht wird, die Membranen 9, durch welche die Lagerung 3 bzw. 4 des Stabes 2 realisiert wird, keinen wesentlichen Rückstellkräften aus der Schwingung ausgesetzt sind. Durch die beschriebene Art der Aufhängung wird weiterhin erreicht, daß der Schwerpunkt des Stabes zu jedem Zeitpunkt der Schwingung in Ruhe ist und deshalb auch keine Zug- oder Stauchkräfte in der zum schwingenden Stab senkrechten Ebene auf die Membranen wirken. Somit ist der schwingende Stab 2 auf einfache Weise praktisch kräftefrei gelagert, so daß Schwingungsverluste durch Übertragung von Schwingungsenergie über die Membranen 9 und über das sie verbindende und haltende Rohrstück 10 auf die Behälterwandung 11 praktisch ausgeschlossen ist.

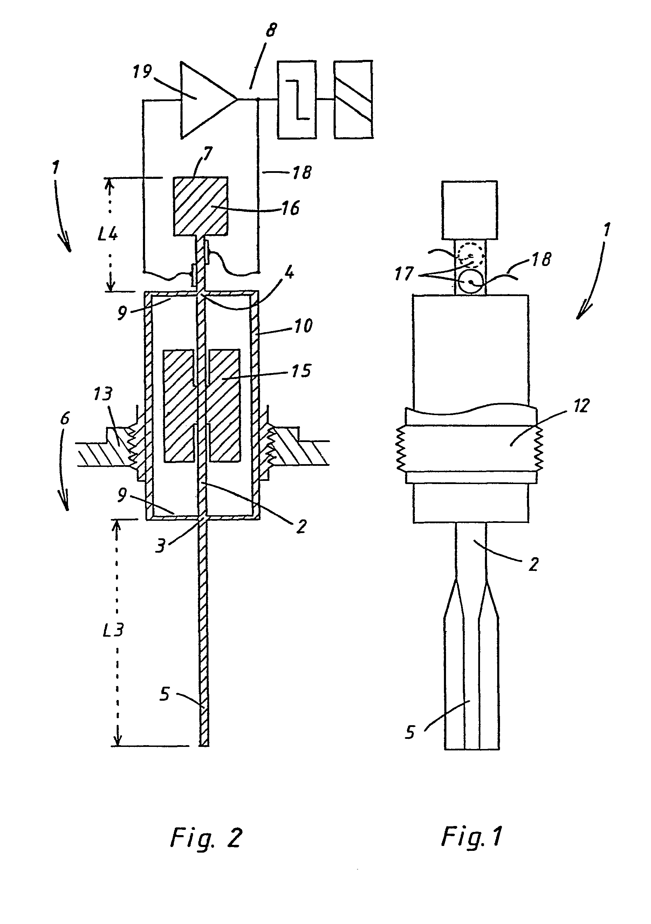

Um die — wenn auch geringen — in der Schwingungsebene auftretenden und auf die Membranen wirkenden Drehmomente auszugleichen, haben die beiden Membranen 9 zur Lagerung 3 und 4 des schwingenden Stabes 2 die gleiche Form und gleiche Größe sowie gleiches Material und sind in Ruhestellung vorzugsweise parallel zueinander angeordnet. Hierdurch wird erreicht, daß zu jedem Zeitpunkt die noch verbleibenden Rückstellkräfte der Membranen 9 über das als mechanische Spannungsbrücke wirkende Rohrstück 10 ausgeglichen werden. Das Rohrstück 10 ist, mit dem freien Ende 5 in den Füllraum 6 des Behälters zeigend, über ein ringförmiges Verbindungselement 12 zum dichten Verbinden mit einer entsprechenden Öffnung in der Wandung 13 des Behälters in diesen eingesetzt. Das in den Füllraum 6 hineinragende freie Ende 5 des Schwingstabes ist paddelförmig ausgebildet. Die Paddelebene liegt dabei senkrecht zur Schwingungsebene des Stabes 2 und ist bei in Fig. 1 sich vertikal vorzustellender Behälterwandung 13 senkrecht orientiert, so daß keine Partikel des Füllgutes auf der Fläche liegenbleiben können, wodurch die Schwingung auch bei Absinken des Füllgutes unter das Höhenniveau des Paddels gedämpft werden könnte. Um das Füllstandskontrollgerät möglichst kompakt zu konstruieren, ist zur Verkleinerung des Abstandes der Schwingungsknoten, also des Abstandes auch zwischen den Membranen 9 in der Mitte des Schwingstabes ein Zusatzgewicht 15 angebracht. Das freie Ende des Schwingstabes, welches jenseits der Lagerung 4 liegt, ist dadurch verkürzt, daß an seinem Ende ein Zusatzgewicht 16 angebracht ist. Zwischen Zusatzgewicht 16 und Lagerung 4 des Schwingungsstabes 2 sind zwei piezoelektrische Elemente 17 eines in bekannter Weise aufgebauten rückgekoppelten Schwingungserregungs- bzw. Abgriffssystems 8 angeordnet. An der Stelle des Schwingungsstabes 2, an dem die piezoelektrischen Elemente 17 angebracht sind, ist der Stab 2 als Flachstab ausgeführt, wobei die piezoelektrischen Elemente an einander gegenüberliegenden Flachseiten axial versetzt aufgeklebt sind. Die große Entfernung der piezoelektrischen Elemente vom Innenraum des Behälters ermöglicht den Einsatz des beschriebenen Gerätes auch bei sehr heißen Temperaturen des Füllgutes. Die piezoelektrischen Elemente 17 sind über Leitungen 18 mit dem Eingang bzw. Ausgang eines Verstärkers 19 zur Bildung eines rückgekoppelten Schwingungssystems verbunden. Zur Erreichung der notwendigen Festigkeit und Korrosionsbeständigkeit sowie zur Gewährleistung einer gleichmäßigen Temperaturausdehnung bestehen der Schwingstab 2, die Lagermembranen 9 und deren Verbindungsrohrstück 10 im Ausführungsbeispiel aus rostfreiem Stahl.

**Patentansprüche**

1. Vorrichtung zum Kontrollieren und/oder Anzeigen des Füllstandes für flüssige, staubförmige, körnige, insbesondere leichte Schüttgüter in einem Behälter, mit einem stabförmigen Schwinger und einem Schwingungserreger, mit welchem der Schwinger zu Schwingungen angeregt wird, und mit einem Schwingungsabgriffssystem, wobei das eine freie Ende (5) des Schwingers in dem Fullraum (6) für das Schüttgut oder dgl. ragt, dadurch gekennzeichnet, daß der Schwinger ein als Biegeschwinger ausgebildeter Stab (2) ist und daß er zwei Lagerungen (3, 4) mit Abstand (L 3, L 4) zu seinen freien Enden (5, 7) aufweist.

2. Vorrichtung nach Anspruch 1, dadurch gekennzeichnet, daß der Stab (2) an oder nahe bei den Stellen gelagert ist, wo sich bei Anregung von Schwingungen des Stabes die Schwingungsknoten bilden, vorzugsweise da, wo der Abstand der Lagerungen (3, 4) eine ungerade Anzahl von Knotenabständen beträgt.

3. Vorrichtung nach Anspruch 1, dadurch gekennzeichnet, daß der Schwingungsstab (2) an oder nahe bei den Stellen gelagert ist, wo sich bei Anregung der Grundschwingung des Stabes (2) die Schwingungsknoten bilden.

4. Vorrichtung nach einem der Ansprüche 1 bis 3, dadurch gekennzeichnet, daß die beiden Lagerungen des Stabes flexibel, vorzugsweise als von diesem durchsetzte und mit ihm verbundene Membranen ausgebildet sind.

5. Vorrichtung nach einem der Ansprüche 1 bis 4, dadurch gekennzeichnet, daß die äußeren Ränder (9a) der beiden zur Lagerung (3, 4) des Stabes (2) dienenden Membranen (9) über ein Rohrstück (10), einen Käfig od. dgl. verbunden sind.

6. Vorrichtung nach einem der Ansprüche 1 bis 5, dadurch gekennzeichnet, daß die beiden Membranen zur Lagerung des schwingenden Stabes die gleiche Form und Größe sowie gleiches Material haben und in Ruhestellung vorzugsweise parallel zueinander angeordnet sind.

7. Vorrichtung nach einem der Ansprüche 1 bis 6, dadurch gekennzeichnet, daß an der Außenseite des die beiden Membranen (9) verbindenden Rohrstückes (10) oder Käfigs oder dgl. ein insbesondere ringförmiges Verbindungselement (12) zum dichten Verbinden mit einer entsprechenden Öffnung in der Wandung des Behälters (13) vorgesehen ist und das Rohrstück (10) oder der Käfig mindestens von diesem Ring (12) aus bis zu der dem Füllraum (6) des Behälters näheren Membran (9) undurchlässig dicht gestaltet ist.

8. Vorrichtung nach Anspruch 7, dadurch gekennzeichnet, daß das ringförmige Verbindungsstuck (12) als Einschraubstück mit einem Außengewinde (14) ausgebildet ist.

9. Vorrichtung nach einem der Ansprüche 1 bis 8, dadurch gekennzeichnet, daß zwischen den beiden Schwingungsknoten des Schwingungsstabes (2), insbesondere in seiner Mitte, eine Zusatzmasse (15) zur Verkleinerung des Abstandes der Schwingungsknoten vorgesehen ist.

10. Vorrichtung nach einem der Ansprüche 1 bis 9, dadurch gekennzeichent, daß das außerhalb des Behälters oder dgl. befindliche freie Ende (7) des Schwingstabes (2) durch eine an ihm angebrachte Zusatzmasse (16) verkürzt ist.

11. Vorrichtung nach einem der Ansprüche 1 bis 10, dadurch gekennzeichnet, daß der Schwingungserreger und/oder das Schwingungsabgriffssystem (8) am Schwingstab (2), vorzugsweise an dem aus dem Behälter vorstehenden freien Ende (7) des Schwingstabes (2) angebracht ist.

12. Vorrichtung nach einem der Ansprüche 1 bis 11, dadurch gekennzeichnet, daß für den Schwingungserreger und/oder für den Schwingungsabgriff (8) je ein piezoelektrisches Element (17), insbesondere an dem freien Ende (7) des Schwingstabes (2) angebracht ist.

13. Vorrichtung nach Anspruch 12, dadurch gekennzeichnet, daß der Schwingstab (2) zumindest im Bereich des Schwingungsantriebes und/oder des Schwingungsabgriffes (8) abgeflacht oder als Flachstab ausgeführt ist und die Piezokeramikscheiben (17) oder dgl. vorzugsweise axial versetzt an einander gegenüberliegenden Flachseiten oder auf derselben Seite aufgeklebt sind.

14. Vorrichtung nach einem der Ansprüche 1 bis 13, dadurch gekennzeichnet, daß die elektrischen Anschlüsse (18) der beiden piezoelektrischen Systeme (17) mit dem Eingang bzw. dem Ausgang eines Verstärkers (19) zur Bildung eines rückgekoppelten Schwingungssystems (8) verbunden sind.

15. Vorrichtung nach einem der Ansprüche 1 bis 14, dadurch gekennzeichnet, daß das in den Füllraum (6) hineinragende Ende (5) des Schwingstabes (2) vorzugsweise paddelförmig ausgebildet ist.

16. Vorrichtung nach einem der vorstehenden Ansprüche, dadurch gekennzeichnet, daß der Schwingstab (2), die Lagermembranen (3, 4), deren Verbindungshülse (10) und/oder das Befestigungsstück oder dgl. aus Metall, vorzugsweise aus rostfreiem Stahl bestehen.

**Revendications**

1. Dispositif pour le contrôle et/ou l'affichage du niveau de produits en vrac, liquides, pulvérulents, granuleux, en particulier légers, contenus dans un récipient, comportant un oscillateur en forme de barre et un générateur d'oscillations communiquant des oscillations à l'oscillateur, et comportant un système de prélèvement d'oscillations, une extrémité libre (5) de l'oscillateur pénétrant dans le volume de remplissage (6), destiné au produit en vrac ou similaire, caractérisé en ce que l'oscillateur est une barre (2), se présentant sous la forme d'un oscillateur en flexion, et en ce qu'il comporte deux supports (3, 4), placés à une certaine distance (L 3, L 4) de ses extrémités libres (5, 7).

2. Dispositif selon la revendication 1, caractérisé en ce que la barre (2) est montée sur ou à proximité des points où se forment les noeuds d'oscillation, lorsque la barre est mise en oscillation, de préférence là où la distance des supports (3, 4) est égale à un nombre impair d'écartements de noeuds.

3. Dispositif selon la revendication 1, caractérisé en ce que la barre d'oscillation (2) est montée sur ou à proximité des points où se forment les noeuds d'oscillation, en cas d'oscillation fondamentale de la barre (2).

4. Dispositif selon l'une quelconque des revendications 1 à 3, caractérisé en ce que les deux supports de la barre sont flexibles, de préférence constitués par des membranes traversées par celle-ci et reliées à celle-ci.

5. Dispositif selon l'une quelconque des revendications 1 à 4, caractérisé en ce que les bords extérieurs (9a) des deux membranes (9), servant de supports (3, 4) à la barre (2), sont reliés par une pièce tubulaire (10), une cage ou similaire.

6. Dispositif selon l'une quelconque des revendications 1 à 5, caractérisé en ce que les deux membranes servant de supports à la barre oscillante, ont la même forme, la même taille et sont réalisées dans le même matériau, et sont disposées de préférence parallèlement entre elles, en position de repos.

7. Dispositif selon l'une quelconque des revendications 1 à 6, caractérisé en ce qu'on prévoit, sur la face extérieure de la pièce tubulaire (10) ou de la cage ou similaire, reliant les deux membranes (9), un élément de liaison (12), en particulier annulaire, pour l'assemblage étanche avec une ouverture correspondante, pratiquée dans la paroi du réservoir (13), et en ce que la pièce tubulaire (10) ou la cage est réalisée de façon à être totalement imperméable, depuis cet anneau (12) jusqu'à la membrane (9) la plus proche du volume de remplissage (6) du réservoir.

8. Dispositif selon la revendication 7, caractérisé en ce que la pièce de liaison (12) annulaire est une pièce à visser présentant un filetage (14).

9. Dispositif selon l'une quelconque des revendications 1 à 8, caractérisé en ce qu'on prévoit une masse supplémentaire (15), destinée à réduire l'écartement des noeuds d'oscillations, entre les deux noeuds d'oscillations de la barre d'oscillation (2), en particulier en son centre.

10. Dispositif selon l'une quelconque des revendications 1 à 9, caractérisé en ce que l'extrémité libre (7) de la barre d'oscillation (2), située à l'extérieur du réservoir ou similaire, est raccourcie par une masse supplémentaire (16) placée sur celle-ci.

11. Dispositif selon l'une quelconque des revendications 1 à 10, caractérisé en ce que le générateur d'oscillations et/ou le système de prélèvement d'oscillations (8), est prévu sur la barre d'oscillation (2), de préférence sur l'extrémité libre (7) de la barre d'oscillation (2), ressortant du réservoir.

12. Dispositif selon l'une quelconque des revendications 1 à 11, caractérisé en ce qu'on place un élément piézo-électrique (17) pour le générateur d'oscillations et/ou pour le système de prélèvement d'oscillations (8), en particulier sur l'extrémité libre (7) de la barre d'oscillation (2).

13. Dispositif selon la revendication 12, caractérisé en ce que la barre d'oscillation (2) est aplatie ou réalisée sous la forme d'un barreau plat, au moins dans la zone de l'entraînement en oscillation et/ou du système de prélèvement d'oscillations (8), et en ce que les disques piézocéramiques (17) ou similaires, sont collés, de préférence décalés axialement, sur des faces planes opposées l'une à l'autre ou sur la même face.

14. Dispositif selon l'une quelconque des revendications 1 à 13, caractérisé en ce que les branchements électriques (18) des deux systèmes piézo-électriques (17) sont reliés à l'entrée ou à la sortie d'un amplificateur (19), pour former un système d'oscillations (8) de rétroaction.

15. Dispositif selon l'une quelconque des revendications 1 à 14, caractérisé en ce que l'extrémité (5) de la barre d'oscillation (2), pénétrant dans le volume de remplissage (6), est de préférence en forme de palette.

16. Dispositif selon l'une quelconque des revendications précédentes, caractérisé en ce que la barre d'oscillation (2), les membranes de support (3, 4), leur douille d'assemblage et/ou la pièce de fixation ou similaire, sont en métal, de préférence en acier inoxydable.

**Claims**

1. An apparatus for controlling and/or indicating the level for liquid, pulverulent, granular, particularly light bulk material in a vessel, including a rod-shaped vibrator and a vibration exciter with which the vibrator is urged to perform vibrations, and further including a vibration pick up system, the one free end (5) of the vibrator projecting into the chamber (6) for the bulk material or the like, characterized in that the vibrator is a rod (2) which is devised to be a bending vibrator and has at a distance (L3, L4) from the free ends (5, 7) thereof two supports (3, 4).

2. The apparatus as claimed in claim 1, characterized in that the rod (2) is supported at or proximate to the locations where the nodal points are formed when the rod is urged to execute vibrations, preferably there where the spacing of the supports (3, 4) amounts to an odd number of nodal point separations.

3. The apparatus as claimed in claim 1, characterized in that the vibratory rod (2) is supported at or proximate to the locations where the nodal points are formed when the rod (2) is urged to execute the fundamental mode of vibration.

4. The apparatus as claimed in any one of claims 1 to 3, characterized in that the two supports of the rod are devised to be flexible, preferably taking the form of diaphragms traversed by and connected to said rod.

5. The apparatus as claimed in any one of claims 1 to 4, characterized in that the outer edges (9a) of the two diaphragms (9) serving for the support (3, 4) of the rod (2) are connected by way of a piece of tubing (10), a cage or the like.

6. The apparatus as claimed in any one of claims 1 to 5, characterized in that the two diaphragms for supporting the vibrating rod are of the same shape and size as well as of the same material and in the position of rest are preferably arranged parallel to one another.

7. The apparatus as claimed in any one of claims 1 to 6, characterized in that on the outside of the piece of tubing (10) or cage or the like connecting the two diaphragms (9) provision is made for a connecting element (12), particularly a ring-shaped one, for being tightly connected to a corresponding opening in the wall of the vessel (13), and the piece of tubing (10) or cage is made to be impermeable at least from said ring (12) up to the diaphragm (9) more proximate to the chamber (6) of the vessel.

8. The apparatus as claimed in claim 7, characterized in that the ring-shaped connecting piece (12) takes the form of a screw-in member with a male thread (14).

9. The apparatus as claimed in any one of claims 1 to 8, characterized in that to make the separation of the nodal points smaller provision is made for an additional mass (15) between the two nodal points of the vibratory rod (2), particularly in the middle of said rod.

10. The apparatus as claimed in any one of claims 1 to 9, characterized in that that free end (7) of the vibratory rod (2) which is situated outside the vessel or the like is shortened by an additional mass (16) fitted thereto.

11. The apparatus as claimed in any one of claims 1 to 10, characterized in that the vibration exciter and/or the vibration pick up svstem (8) is fitted to the vibratory rod (2), preferably to the free end (7) thereof projecting out of the vessel.

12. The apparatus as claimed in any one of claims 1 to 11, characterized in that for the vibration exciter and/or for the vibration pick up (8) there is in each case one piezoelectric element (17) fitted particularly to the free end (7) of the vibratory rod (2).

13. The apparatus as claimed in claim 12, characterized in that the vibratory rod (2) is flattened or takes the form of a flat bar at least in the region of the vibration drive and/or the vibration pick up (8) and the piezo-ceramic discs (17) or the like are affixed, preferably axially offset, to flat sides opposite each other or on the same side.

14. The apparatus as claimed in any one of claims 1 to 13, characterized in that the electrical connections (18) of the two piezoelectric systems (17) are connected to the input and output of an amplifier (19) to form a feedback vibration system (8).

15. The apparatus as claimed in any one of claims 1 to 14, characterized in that that end (5) of the vibratory rod (2) which projects into the chamber (6) is preferably devised to be paddle-shaped.

16. The apparatus as claimed in any one of the preceding claims, characterized in that the vibratory rod (2), support diaphragms (3, 4), the connecting sleeve (10) thereof and/or the fixing piece or the like consist of metal, preferably of stainless steel.

Fig. 2

Fig. 1